# EUROPÄISCHE PATENTSCHRIFT

(11) **EP 0 379 019 B1**
(45) Veröffentlichungstag und Bekanntmachung des Hinweises auf die Patenterteilung: **10.02.1993**
(21) Anmeldenummer: 90100281.6
(22) Anmeldetag: 08.01.1990
(51) Int. Cl.: B65G 59/02

(54) **Auf einem horizontal verfahrbaren Einschubwagen angeordnete Platteneinschubvorrichtung**
Panel slide-in device arranged on a horizontally moving slide-in carriage
Dispositif pour faire coulisser des plaques, installé sur un chariot coulissant mobile horizontal

(30) Priorität: 20.01.1989 DE 3901537
(43) Veröffentlichungstag der Anmeldung: 25.07.1990
(73) Patentinhaber: Holzma-Maschinenbau GmbH, D-75365 Calw (DE)
(72) Erfinder: Schwab, Burkhard, D-7260 Calw-Alzenberg (DE); Jenkner, Erwin, D-7261 Gechingen (DE)
(74) Vertreter: Becker, Maria, Dipl.-Phys.

(56) Entgegenhaltungen:
- DD-A- 210 664
- DE-A- 2 549 234
- DE-A- 2 559 316
- DE-A- 3 430 029
- DE-A- 3 444 776
- DE-C- 3 515 729

## Beschreibung

Die Erfindung betrifft eine auf einem horizontal verfahrbaren Einschubwagen angeordnete Platteneinschubvorrichtung zum Einschieben von auf einem ihr zugeordneten Hubtisch abgelegten, plattenförmigen Werkstücken in Plattenaufteilanlagen, mit einem am Einschubwagen vertikal verstellbar geführten und an eine Kante eines Werkstückes oder eine Seite eines Werkstückstapels anlegbaren Schiebeglied, einem dem Schiebeglied zu dessen Abstützung und Höhenführung während des Vorschubes zugeordneten, auf der Oberseite eines Werkstückes bzw. eines Werkstückstapels aufruhenden, in Vorschubrichtung (V) gesehen, im Abstand von der Werkstückkante bzw. Stapelseite vorgesehenen Wälzkörper, einer Hubeinrichtung zum vorwählbaren Einstellen der Hubhöhe des Hubtisches für eine gewünschte Anzahl abzuschiebender Werkstücke relativ zu einer Ausgangsstellung des Schiebegliedes derart, dass beim anschliessenden Vorschub der Wälzkörper das Schiebeglied ständig im Abstand oberhalb der oberen Seite eines auf dem Hubtisch verbleibenden Werkstückes bzw. eines Werkstückstapels hält, und mit einer Messvorrichtung, die ein am Einschubwagen vertikal vrstellbares Informationsglied aufweist, durch das während des Tischhubes die Hubstrecke feststellbar und bei Erreichen einer vorgewählten Hubstrecke ein Steuersignal zur Stillsetzung der Hubeinrichtung erzeugbar ist.

Eine diese Merkmale aufweisende Platteneinschubvorrichtung ist aus der DE-PS 35 15 729 bekannt. Bei dieser Konstruktion ist das Schiebeglied entlang einer vertikalen Führung des Einschubwagens verschiebbar und feststellbar geführt.

Dem Schiebeglied ist ein Abstützglied in Form eines sich von diesem in Vorschubrichtung erstreckenden Abstützarmes zugeordnet, der seinerseits relativ zum Schiebeglied vertikal verstellbar und mit diesem kuppelbar vorgesehen ist.

Der Abstützarm trägt ein sich nach oben erstreckendes, stangenförmiges Informationsglied, das mit einem stationären Abtastglied zusammenwirkt, mit dessen Hilfe die durch den Hubtisch zurückgelegte Hubstrecke festgestellt und ein Steuersignal zur Stillsetzung des Hubtisches erzeugt wird, sobald eine vorgewählte Tischhöhe zum Abschieben einer gewünschten Anzahl plattenförmiger Werkstücke durch das Schiebeglied erreicht ist.

Während des Tischhubes ist der Abstützarm vom Schiebeglied abgekoppelt, so dass dieses seine Ausgangslage beibehält. Nach Stillsetzen des Hubtisches werden Abstützarm und Schiebeglied selbsttätig miteinander gekoppelt, so dass bei dessen sich anschliessender Vorschubbewegung der Abstützarm das Schiebeglied ständig in einem gleichbleibenden Abstand oberhalb der oberen Fläche des auf dem Stapel verbleibenden oberen Werkstückes hält.

Dadurch ist sichergestellt, dass das untere Stirnende des Schiebegliedes beispielsweise beim Überfahren der oberen Werkstückplatte eines Werkstückstapels nicht mit dessen oberer Fläche in Berührung kommen und diese beschädigen kann, sofern die aufeinandergeschichteten Werkstückplatten in Vorschubrichtung oder auch quer hierzu wellig oder verzogen sein sollten.

Mit der DE-PS 25 49 234 ist eine Schiebevorrichtung bekannt, die ebenfalls mit einem in der Höhe verstellbaren, horizontal beweglichen Schieber ausgestattet ist. Bei dieser Konstruktion ist jedoch zur Hubbegrenzung des Werkstückstapels eine vom Schieber getrennte, gestellfeste Abtastvorrichtung vorgesehen.

Der Schieber weist eine Laufrolle auf und ist um eine horizontale Achse verschwenkbar gelagert. Zum Ausgleich von Unebenheiten ist die Schwenklage des den Schieber tragenden Schiebearmes vorzuwählen und durch einen Bolzen festzulegen. Diese Einrichtung ist einerseits ungenau, andererseits ist ein grosser Bauaufwand erforderlich.

Der Erfindung liegt die Aufgabe zugrunde, bei einer Platteneinschubvorrichtung der eingangs genannten Art den konstruktiven Aufwand zu verringern und die Messvorrichtung zur Ansteuerung der Hubeinrichtung zu vereinfachen, so dass zur Hubbemmessung auf eine Relativverstellung des Wälzkörpers und damit auf den Einsatz von Hilfsenergie verzichtet werden kann.

Diese Aufgabe wird erfindungsgemäss dadurch gelöst, dass der Wälzkörper an dem am Einschubwagen vertikal schwimmend geführten Schiebeglied in Vorschubrichtung (V) nach dessen Anschlagfläche und in unmittelbarer Nachbarschaft zu dieser gelagert ist und in zur Hubrichtung des Hubtisches entgegengesetzter Richtung geringfügig über das Schiebeglied vorsteht und sich auf der Oberseite des auf dem Hubtisch verbleibenden Werkstückes abwälzt, und dass das Informationsglied eine am Einschubwagen in Vorschubrichtung (V) unmittelbar vor dem Schiebeglied vorgesehene, auf die Oberseite eines Werkstücks bzw. Werkstückstapels wirkende, vom Wälzkörper separate Messvorrichtung bildet.

Bei der erfindungsgemässen Konstruktion ist der Wälzkörper mit dem Schiebeglied fest verbunden, wobei er sich während des Vorschubes auf der Oberseite der auf dem Hubtisch verbleibenden Werkstückplatte abwälzt. Trifft er dabei an der Plattenoberseite auf Unebenheiten, so wird durch denselben das Schiebeglied entsprechend angehoben oder auch abgesenkt, wobei stets der gleiche Abstand zwischen diesem und der betreffenden Werkstückoberseite aufrechterhalten bleibt. Dadurch ist auch bei stark wellig ausgeprägter oberer Werkstückfläche ein berührungsfreies Überfahren derselben durch das Schiebeglied gewährleistet.

In der Zeichnung ist ein Ausführungsbeispiel der Erfindung, stark schematisiert, dargestellt. Es zeigen:
Fig. 1 eine Seitenansicht einer an einem Einschubwagen angeordneten Platteneinschubvorrichtung, in ihrer Ausgangsstellung,
Fig. 2 eine Darstellung ähnlich Fig. 1, wobei jedoch der Hubtisch in eine Stellung zum Abschieben einer gewünschten Anzahl von Werkstückplatten von einem Plattenstapel angehoben ist,
Fig. 3 die Platteneinschubvorrichtung in Aktion.

Die in der Zeichnung gezeigte Platteneinschubvorrichtung ist als Ganzes mit 10 bezeichnet. Sie ist entlang einer horizontalen Führungsschiene 12 des Führungsgestells einer Vorschubeinrichtung 14 in geeigneter Weise verschiebbar geführt, um einzelne, plattenförmige Werkstücke oder Plattenpakete auf einen Maschinentisch 16 einer Plattenaufteilanlage aufzuschieben und zum Aufteilen des Materials in der Plattenaufteilanlage um vorbestimmte Vorschubwege vorzustellen.

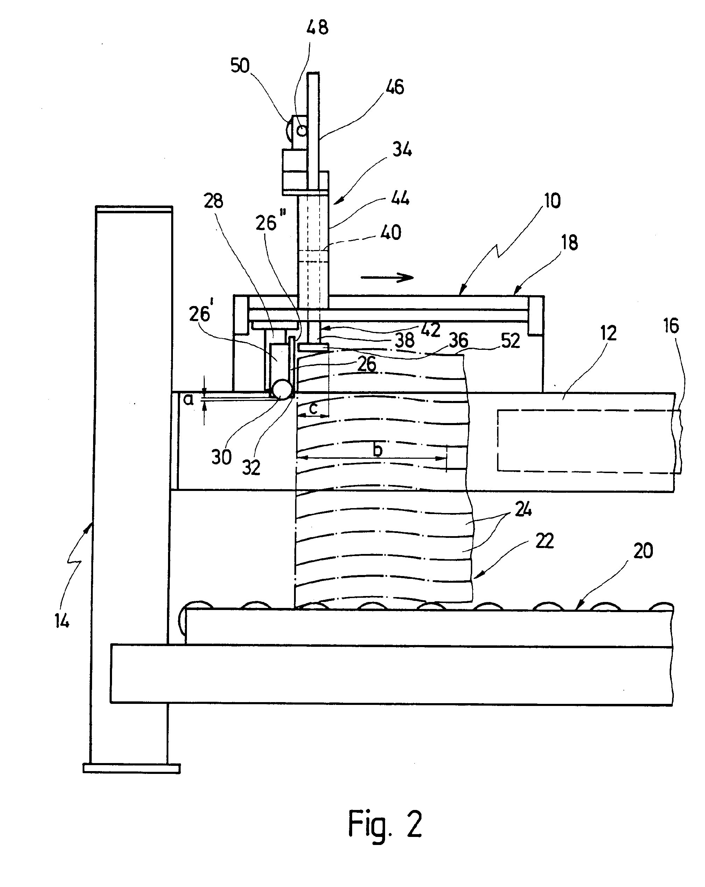

Der Antrieb der Platteneinschubvorrichtung in Vorschubrichtung kann in beliebiger Weise, z.B. über eine angetriebene Schleppkette, erfolgen. Selbstverständlich könnte die Platteneinschubvorrichtung 10 auch zwischen zwei Führungsschienen geführt sein, welche den Maschinentisch 16 seitlich übergreifen könnten. Ausserdem ist es denkbar, gemäss DE-PS 3515729 -Fig. 2- zwischen zwei Führungsschienen mehrere Platteneinschubvorrichtungen 10 in seitlichem Abstand voneinander auf einer gemeinsamen Traverse eines zwischen oder auf den Führungsschienen geführten Einschubwagens anzuordnen.

Beim vorliegenden Ausfürungsbeispiel weist die Platteneinschubvorrichtung 10 einen an der Führungsschiene 12 geführten Einschubwagen 18 auf, der in seiner Ausgangsstellung sich oberhalb eines Hubtisches 20 befindet, auf den ein Stapel 22 plattenförmiger Werkstücke 24 absetzbar ist, von dem mit Hilfe der Platteneinschubvorrichtung 10 einzelne Werkstücke 24 oder jeweils eine gleiche Anzahl von Werkstücken umfassende Plattenpakete auf dem Maschinentisch 16 auf- und in Vorschubrichtung um vorbestimmte Wege zum Aufteilen in der Plattenaufteilanlage weitergeschoben werden sollen.

Das Abschieben erfolgt mittels eines Schiebegliedes 26, das an einem am Einschubwagen 18 gehaltenen Führungskörper 28 in geeigneter Weise vertikal verstellbar geführt ist. Vorzugsweise umgreift hierbei das Schiebeglied 26 mit seitlichen Schenkeln 26′ den Führungskörper 28, wobei zwischen diesen Teilen vorzugsweise jeweils eine Kugelführung vorgesehen ist. Selbstverständlich kann anstelle einer solchen Wälzführung auch eine Gleitführung vorgesehen sein.

Am Schiebeglied 26 ist ein Wälzkörper vorzugsweise in Form einer Abstützrolle 30 gelagert, der mit einem Umfangsteil geringfügig über die untere Stirnfläche 32 des Schiebegliedes (Überstand a) vorsteht. Zugleich ist die Anordnung des Wälzkörpers 30 so getroffen, dass dieser nahe einem vom Hubtisch abzuschiebenden plattenförmigen Werkstück 24 bzw. einem Plattenpaket nacheilt. Der Wälzkörper könnte auch durch eine geeignet gefasste Kugel oder durch ein endloses, raupenartig geführtes Band gebildet sein.

Mit 34 ist als Ganzes eine Messvorrichtung bezeichnet, mit deren Hilfe eine gewünschte Hubhöhe des Hubtisches 20 vorwählbar und überwachbar ist. Diese sitzt gleichfalls am bzw. auf dem Einschubwagen 18 und arbeitet unabhängig von der Bewegung des Schiebegliedes 26. Sie weist ein Tastglied 36 auf, das durch das vorzugsweise plattenförmig gestaltete Ende eines unteren Kolbenstangenteilstückes 38 einer mit einem Kolben 40 verbundenen Kolbenstange 42 gebildet ist, die aus beiden Stirnenden eines den Kolben 40 führenden, vertikal angeordneten Führungszylinders 44 herausragt. Das obere Kolbenstangenteilstück 46 bildet zugleich ein Informationsglied, an dessen Umfang eine sich vorzugsweise schwach konisch verjüngende Rolle 48 einer inkrementalen Drehgebereinrichtung 50 abstützt.

Anstelle der erläuterten Messvorrichtung 34 zum Vorwählen der Hubstrecke des Hubtisches 20 könnte in bekannter Weise auch eine berührungslos arbeitende Messvorrichtung vorgesehen sein, indem als Informationsglied beispielsweise ein binär kodierter Maßstab vorgesehen sein könnte, der auf fotoelektrischem Wege abgetastet wird.

Der Führungszylinder 44 ist doppelt beaufschlagt, d.h. der Kolben 40 ist in beiden möglichen Bewegungsrichtungen vorzugsweise durch Druckluft steuerbar.

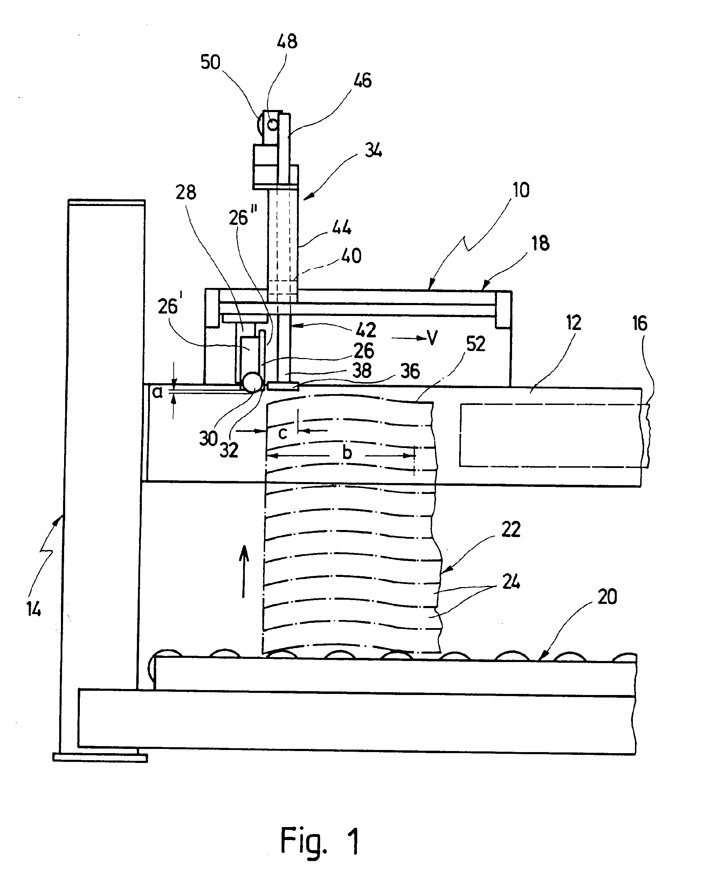

Das Tastglied 36 der Messvorrichtung 34 befindet sich, in Vorschubrichtung V gesehen, unmittelbar vor und nahe am Schiebeglied 26, wobei es in seiner unteren Taststellung (Fig. 1) nach unten mit dem Schiebeglied 26 abschliesst. Die Zuordnung des Tastgliedes 36 zur Anschlagfläche 26˝ des Schiebegliedes 26 hat, genauso wie diejenige der Abstützrolle 30 zu dieser, möglichst nahe zu erfolgen, um sicherzustellen, dass die Aufsatzpunkte von Tastglied 36 und Abstützrolle 30 auf der Oberseite eines plattenförmigen Werkstückes 24 bzw. eines vom Plattenstapel 22 abzuschiebenden Plattenpaketes möglichst nahe beieinanderliegen. Dadurch ist gewährleistet, dass auch bei einer stark unebenen Werkstück- bzw . Stapeloberseite die Höhendifferenz der Abstützpunkte der beiden Teile 30 und 36 derart gering bleibt, dass im Falle vom Plattenstapel 22 abzuschiebender Plattenpakete auch bei geringer Plattendicke stets die Mitnahme einer gleichen Anzahl übereinandergeschichteter, plattenförmiger Werkstücke 24 in Vorschubrichtung bzw. auf den Maschinentisch 16 gewährleistet ist.

Beim gezeigten Ausführungsbeispiel sind die aufeinandergeschichteten, plattenförmigen Werkstücke 24 beispielsweise in Vorschubrichtung V wellenförmig uneben. Wobei eine dieser Wellen sich über einen Bereich b erstreckt. Die Zuordnung von Abstützrolle 30 und Tastglied 36 zur Anschlagfläche 26˝ des Schiebegliedes 26 ist hierbei so getroffen, dass sich zur Bemessung der Hubstrecke des Hubtisches 20 das Tastglied 36 im Bereich eines in Vorschubrichtung aufsteigenden Wellenabschnittes c auf der Oberseite 52 des oberen plattenförmigen Werkstückes 24 abstützt. In diesem Bereich läuft nach erfolgtem Tischhub die Abstützrolle 30 auf die Oberseite 52 desjenigen plattenförmigen Werkstückes 34 auf, welches beim Abschieben eines Plattenpaketes auf dem Plattenstapel 22 verbleibt.

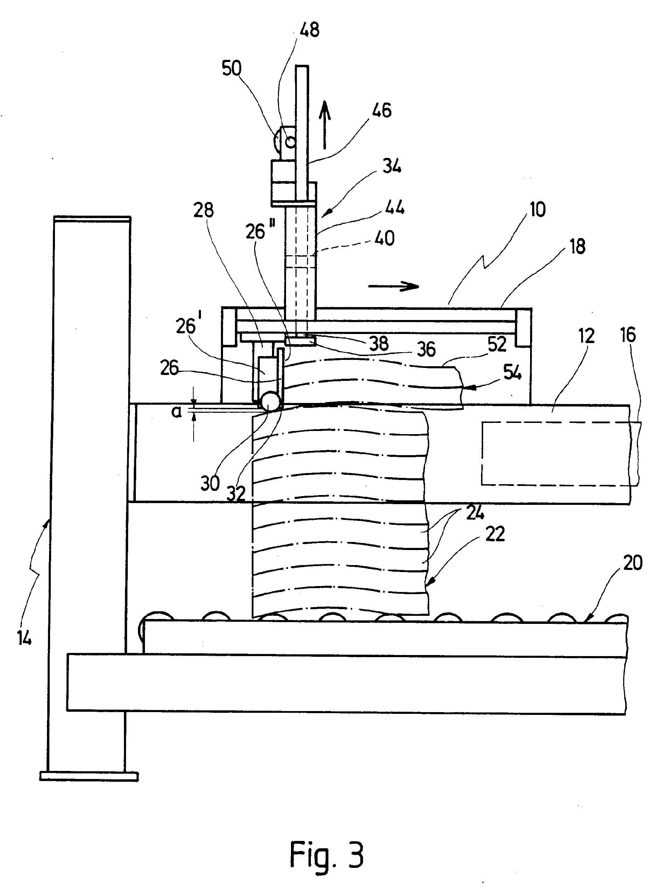

Die erläuterte Platteneinschubvorrichtung 10 arbeitet folgendermassen:
Wie aus Fig. 3 zu ersehen ist, befindet sich das Tastglied 36 der Messvorrichtung 34 in einer angehobenen Ausgangsstellung und ein zu verarbeitender Plattenstapel 22 befindet sich auf dem Hubtisch 20, in Vorschubrichtung V gesehen, hinter dem Maschinentisch 16.

Mit Hilfe der Messvorrichtung 34 lässt sich der Hubtisch 20 derart steuern, dass nach erfolgtem Hub mittels der Platteneinschubvorrichtung 10 eine gewünschte Anzahl plattenförmiger Werkstücke 24 vom Plattenstapel 22 auf den Maschinentisch 16 aufschiebbar und zum Aufteilen der Werkstückplatten anschliessend schrittweise der betreffenden Plattenaufteilanlage zuführbar sind.

Im vorliegenden Falle sollen beispielsweise jeweils zwei aufeinanderliegende Werkstückplatten der Plattenaufteilanlage zugeführt werden. Hierzu wird zunächst das Tastglied 36 durch entsprechende Beaufschlagung des Kolbens 40 der Messvorrichtung 34 in seine, gemäss Fig. 1, untere Endstellung gesteuert, in welcher es sich in der Ebene des unteren Stirnendes des Schiebegliedes 26 befindet. Diese Ebene ist in bezug auf das obere plattenförmige Werkstück 24 des Plattenstapels 22 so gewählt, dass sich während der Vorschubbewegung des Einschubwagens 18 die untere Stirnfläche 32 des Schiebegliedes 26, wie Fig. 2 zeigt, geringfügig oberhalb der oberen Seite dieses Werkstückes 24 befindet, so dass mit Sicherheit nur die gewünschte Anzahl von Werkstücken 24 vom Plattenstapel 22 abgeschoben wird.

Nach Absenken des Tastgliedes 26 in seine untere Taststellung (Fig. 1) erfolgt die Hubbewegung des Hubtisches 20, wobei schliesslich das Tastglied 26 bzw. die Kolbenstange 42 und der Kolben 40 im Führungszylinder 44 nach oben verschoben werden. Dabei wird der für eine gewünschte Anzahl abzuschiebender Werkstücke 24 erforderliche Kolbenstangenweg durch die Drehgebereinrichtung 50 überwacht. Ist die entsprechende Hubhöhe erreicht, wird über die Messvorrichtung 34 der Antrieb des Hubtisches 20 unterbrochen, und der Einschubwagen 18 in Vorschubrichtung V in Gang gesetzt. Hierbei fährt die Anschlagfläche 26˝ des Schiebegliedes 26 an die benachbarte Kante der nunmehr sich vor dem Schiebeglied 26 befindenden plattenförmigen Werkstücke 24 an, wobei im Verlauf der Vorschubbewegung die Abstützrolle 30 mit der oberen Fläche 52 des oben liegenden Werkstückes 24 in Berührung kommt und sich auf dieser abwälzt. Dabei wird die untere Stirnfläche 32 des Schiebegliedes 26 ständig in einem Abstand a oberhalb der unebenen Werkstückoberseite 52 gehalten und dadurch während des Vorschubes eine Beschädigung der oben liegenden Fläche 52 des nunmehr auf dem Plattenstapel 22 oben liegend verbleibenden Werkstückes 24 durch das Schiebeglied 26 vermieden.

Nach Aufteilen des betreffenden Plattenpakets 54 (Fig. 3) fährt der Einschubwagen 18 in seine gemäss Fig. 1 hintere Ausgangsstellung zurück, das Tastglied 36 wird in seine untere Taststellung (Fig. 1) gesteuert, worauf der Plattenstapel 22 mittels des Hubtisches 20 erneut um einen durch die Messvorrichtung 34 überwachten Weg angehoben wird, um wiederum ein vorzugsweise die gleiche Anzahl plattenförmiger Werkstücke 24 umfassendes Plattenpaket für den Vorschub vor dem Schiebeglied 26 bereitzustellen. Ist diese Position (Fig. 2) erreicht, wird das Tastglied 36 mittels Druckluft in seine in Fig. 3 gezeigte Ausgangsstellung nach oben zurückgesteuert, wonach der Einschubwagen 18 erneut in Gang gesetzt wird (Fig. 3).

Die erläuterte Platteneinschubvorrichtung bietet den Vorteil, dass sie sich ohne manuellen Eingriff für das Abschieben einer gewünschten Anzahl von Werkstückplatten 24 von einem bereitgestellten Plattenstapel 22 in kürzester Zeit einstellen bzw. umrüsten lässt.

## Patentansprüche

1. Auf einem horizontal verfahrbaren Einschubwagen (18) angeordnete Platteneinschubvorrichtung (10) zum Einschieben von auf einem ihr zugeordneten Hubtisch (20) abgelegten, plattenförmigen Werkstücken (24) in Plattenaufteilanlagen, mit einem am Einschubwagen (18) vertikal verstellbar geführten und an eine Kante eines Werkstückes (24) oder eine Seite eines Werkstückstapels (54) anlegbaren Schiebeglied (26), einem dem Schiebeglied (26) zu dessen Abstützung und Höhenführung während des Vorschubes zugeordneten, auf der Oberseite (52) eines Werkstückes (24) bzw. eines Werkstückstapels (22) aufruhenden, in Vorschubrichtung (V) gesehen, im Abstand von der Werkstückkante bzw. Stapelseite vorgesehenen Wälzkörper (30), einer Hubeinrichtung zum vorwählbaren Einstellen der Hubhöhe des Hubtisches (20) für eine gewünschte Anzahl abzuschiebender Werkstücke (24) relativ zu einer Ausgangsstellung des Schiebegliedes (26) derart, dass beim anschliessenden Vorschub der Wälzkörper (30) das Schiebeglied (26) ständig im Abstand oberhalb der oberen Seite (52) eines auf dem Hubtisch (20) verbleibenden Werkstückes (24) bzw. eines Werkstückstapels (22) hält, und mit einer Messvorrichtung (34), die ein am Einschubwagen (18) vertikal verstellbares Informationsglied aufweist, durch das während des Tischhubes die Hubstrecke feststellbar und bei Erreichen einer vorgewählten Hubstrecke ein Steuersignal zur Stillsetzung der Hubeinrichtung erzeugbar ist,
**dadurch gekennzeichnet,**
dass der Wälzkörper (30) an dem am Einschubwagen (18) vertikal schwimmend geführten Schiebeglied (26) in Vorschubrichtung (V) nach dessen Anschlagfläche (26") und in unmittelbarer Nachbarschaft zu dieser gelagert ist und in zur Hubrichtung des Hubtisches (20) entgegengesetzter Richtung geringfügig über das Schiebeglied (26) vorsteht und sich auf der Oberseite des auf dem Hubtisch (20) verbleibenden Werkstückes (24) abwälzt, und dass das Informationsglied eine am Einschubwagen in Vorschubrichtung (V) unmittelbar vor dem Schiebeglied (26) vorgesehene, auf die Oberseite (52) eines Werkstücks (24) bzw. Werkstückstapels (54) wirkende, vom Wälzkörper (30) separate Messvorrichtung bildet.

2. Platteneinschubvorrichtung nach Anspruch 1, dadurch gekennzeichnet, dass die Messvorrichtung ein Tastglied (36) ist.

3. Platteneinschubvorrichtung nach Anspruch 2, dadurch gekennzeichnet, dass das Tastglied (36) durch eine Kolbenstange (42) eines in einem Führungszylinder (44) vertikal geführten Kolbens (40) gebildet ist, die aus beiden Zylinderstirnenden herausragt, wobei das obere Kolbenstangenteilstück (46) ein Informationsglied trägt oder bildet, an dessen Umfang eine sich insbesondere schwach konisch verjüngende Rolle (48) einer inkrementalen Drehgebereinrichtung (50) angepresst ist.

4. Platteneinschubvorrichtung nach einem der vorhergehenden Ansprüche, dadurch gekennzeichnet, dass der Wälzkörper als Abstützrolle (30) ausgebildet ist.

## Claims

1. Panel slide-in device (10) arranged on a horizontally movable slide-in carriage (18) for sliding panel-type workpieces (24) deposited on a lifting table (20) associated with the panel slide-in device into panel dividing apparatus comprising a slide element (26) guided for vertical adjustment on the slide-in carriage (18) and for placement against an edge of a workpiece (24) or a side of a stack (54) of workpieces, a rolling element (30) associated with the slide element (26) for supporting and vertically guiding it during the feeding motion, the rolling element resting on the top surface (52) of a workpiece (24) or a stack (22) of workpieces and, seen in the feed direction (V), being spaced from the workpiece edge or side of the stack, a lifting device for preselectively adjusting the lifting height of the lifting table (20) for sliding off a desired number of workpieces (24) relative to an initial position of the slide element (26) in such a way that during the subsequent feeding, the rolling element (30) holds the slide element (26) constantly at a spacing above the top surface (52) of a workpiece (24) or a stack (22) of workpieces remaining on the lifting table (20), and a measuring device (34) having an information element which is vertically adjustable on the slide-in carriage (18) and by means of which the lifting distance during the lifting of the table is determinable and a control signal is producible for stopping the lifting device on reaching a preselected lifting distance, characterized in that the rolling element (30) is mounted on the slide element (26) which is floatingly guided in the vertical direction on the slide-in carriage (18), in the feed direction (V) after the stop surface (26") of the slide element and in the immediate proximity thereof, and protrudes slightly beyond the slide element (26) in the direction opposite to the lifting direction of the lifting table (20) and rolls along the top surface of the workpiece (24) remaining on the lifting table (20), and in that the information element forms separately from the rolling element (30) a measuring device which is provided on the slide-in carriage in the feed direction (V) immediately before the slide element (26) and acts on the top surface (52) of a workpiece (24) or stack (54) of workpieces.

2. Panel slide-in device as defined in claim 1, characterized in that the measuring device is a feeling element (36).

3. Panel slide-in device as defined in claim 2, characterized in that the feeling element (36) is formed by a piston rod (42) of a piston (40) guided vertically in a guiding cylinder (44), the piston rod protruding from both cylinder end faces and the upper piston rod portion (46) carrying or forming an information element against the circumference of which a roller (48), in particular, of slightly conically tapering configuration, of an incremental rotary encoder device (50) is pressed.

4. Panel slide-in device as defined in one of the preceding claims, characterized in that the rolling element is designed as a supporting roller (30).

## Revendications

1. Dispositif (10) d'amenée de plaques, disposé sur un chariot d'amenée mobile horizontalement (18), pour amener, dans des installations de distribution de plaques, des pièces (24) en forme de plaque déposées sur une table élévatrice (20) conjuguée à ce dispositif, comportant : un organe translateur (26) guidé avec possibilité de déplacement vertical sur le chariot d'amenée (18) et applicable contre un bord d'une pièce (24) ou contre un côté d'une pile de pièces (54); un organe de roulement (30) qui est conjugué à l'organe translateur (26) pour le soutenir et le guider en hauteur pendant l'avance, et qui repose sur le côté supérieur (52) d'une pièce (24) ou, selon le cas, d'une pile de pièces (22) et est prévu, en le considérant sur la direction de l'avance (V), à distance du bord de la pièce ou, selon le cas, du côté de la pile; un dispositif élévateur (20) pour régler, avec possibilité de sélection, en vue d'un nombre désiré de pièces (24) à extraire, la hauteur de levage de la table élévatrice (20) par rapport à une position initiale de l'organe translateur (26), de manière que, lors de l'avance des organes de roulement (30) qui a lieu ensuite, l'organe translateur (26) soit constamment à distance au-dessus du côté supérieur (52) d'une pièce (24) restant sur la table élévatrice (20), ou d'une pile de pièces (22); et un dispositif de mesure (34) qui présente un organe d'information, lequel est déplaçable verticalement sur le chariot d'amenée (18) et permet d'observer la course de levée pendant la montée de la table et de produire un signal de commande pour immobiliser le dispositif élévateur lorsqu'une course de levée présélectionnée est atteinte,
caractérisé
par le fait que l'organe de roulement (30) est monté sur l'organe translateur (26), lequel est guidé verticalement avec flottement sur le chariot d'amenée (18), et se trouve, sur la direction d'avance (V), après la surface de butée (26˝) de l'organe translateur (26) et à proximité immédiate de cette dernière, et, sur la direction opposée à la direction de levage de la table élévatrice (20), déborde légèrement au-delà de l'organe translateur (26) et roule sur le côté supérieur de la pièce (24) restant sur la table élévatrice (20), et par le fait que l'organe d'information forme un dispositif de mesure, lequel est prévu sur le chariot d'amenée, sur la direction d'avance (V) immédiatement avant l'organe translateur (26), agit sur le côté supérieur (52) d'une pièce (24) ou, selon le cas, d'une pile de pièces (54) et est séparé de l'organe de roulement (30).

2. Dispositif d'amenée de plaques selon revendication 1, caractérisé par le fait que le dispositif de mesure est un organe palpeur (36).

3. Dispositif d'amenée de plaques selon revendication 2, caractérisé par le fait que l'organe palpeur (36) est formé par une tige (42) d'un piston (40) guidé verticalement dans un cylindre de guidage (44), laquelle déborde des deux extrémités du cylindre, la portion supérieure (46) de cette tige de piston portant ou formant un organe d'information contre la périphérie duquel est appliqué avec serrage un galet (48) ayant notamment une légère conicité et appartenant à un dispositif capteur de rotation incrémental (50).

4. Dispositif d'amenée de plaques selon l'une des revendications précédentes, caractérisé par le fait que l'organe de roulement est réalisé en tant galet d'appui (30).
